# EUROPEAN PATENT APPLICATION

(11) **EP 4 506 299 A1**
(43) Date of publication of application: **12.02.2025**
(21) Application number: 23778390.7
(22) Date of filing: 30.03.2023
(51) Int. Cl.: B66F 7/02, B60L 53/80

(54) **LIFTING DEVICE FOR BATTERY SWAP STATION, AND BATTERY SWAP STATION**

(30) Priority: 02.04.2022 CN 202220773854 U
(71) Applicant: Contemporary Amperex Energy Service Technology Limited, Xiamen, Fujian 361001 (CN)
(72) Inventor: CHEN, Dewei, Xiamen, Fujian 361001 (CN); YE, Qingfeng, Xiamen, Fujian 361001 (CN)
(74) Representative: Ran, Handong
(86) International application number: PCT/CN2023/085152
(87) International publication number: WO 2023/186025

(57) **Abstract**

A lifting device for a battery swap station and a battery swap station. The lifting device comprises a driving mechanism (3), a lifting mechanism (4) and a transmission mechanism (5). The lifting mechanism (4) comprises a first lifting assembly (41) and a second lifting assembly (42), wherein the first lifting assembly (41) and the second lifting assembly (42) are arranged on two sides of the driving mechanism (3) in a first direction and are used for lifting an electric device, the first direction being perpendicular to a direction in which the electric device is lifted. The transmission mechanism (5) comprises a first transmission assembly (51) and a second transmission assembly (52), wherein the first transmission assembly (51) is connected to the driving mechanism (3) and the first lifting assembly (41); the second transmission assembly (52) is connected to the driving mechanism (3) and the second lifting assembly (42); and by means of the first transmission assembly (51) and the second transmission assembly (52), the driving mechanism (3) drives the first lifting assembly (41) and the second lifting assembly (42) to move synchronously. In the lifting device, by means of the two transmission assemblies, the two lifting assemblies in a lifting mechanism can synchronously move, such that a vehicle can be lifted stably under the action of the two lifting assemblies, thus the stability and the reliability in a process of lifting of a vehicle are improved.

## Description

### CROSS REFERENCE

The present disclosure claims priority to Chinese patent application No. 202220773854.3 filed on April 02, 2022, titled "Lifting Device for Battery Swapping Station and Battery Swapping Station", the contents of which are incorporated herein by reference in its entirety.

### TECHNICAL FIELD

The present disclosure relates to the technical field of a battery swapping, and in particular, to a lifting device for a battery swapping station and a battery swapping station.

### BACKGROUND

Energy conservation and emission reduction are the key to a sustainable development of the automobile industry. In this case, an electrical vehicle has become an important part of a sustainable development of the automobile industry due to advantages of energy saving and environmental friendliness. For the electrical vehicle, battery charging and swapping technology is an important factor related to the development.

At present, in addition to charging a battery in the electrical vehicle through a charging device to guarantee a continuous operation of the electric vehicle, the battery in the electric vehicle can also be replaced in a battery swapping station, thereby avoiding long-term charging of the battery and quickly replenishing energy for the electrical vehicle with insufficient energy.

### SUMMARY

In view of the above problems, the present disclosure provides a lifting device for a battery swapping station and a battery swapping station. A first lifting assembly and a second lifting assembly can simultaneously lift an electrical apparatus.

In a first aspect, embodiments of the present disclosure provide a lifting device for a battery swapping station, including a driving mechanism, a lifting mechanism and a transmission mechanism. The lifting mechanism includes a first lifting assembly and a second lifting assembly arranged on two sides of the driving mechanism along a first direction respectively and configured for lifting an electrical apparatus, and the first direction are perpendicular to a lifting direction of the electrical apparatus.

The transmission mechanism includes a first transmission assembly and a second transmission assembly, the first transmission assembly is connected to the driving mechanism and the first lifting assembly, the second transmission assembly is connected to the driving mechanism and the second lifting assembly, and the driving mechanism is configured to drive the first lifting assembly and the second lifting assembly to move synchronously through the first transmission assembly and the second transmission assembly, respectively.

In the above solution, transmission between the driving mechanism and the lifting mechanism is realized by the transmission mechanism. At the same time, the transmission mechanism includes two transmission assemblies for the synchronous movement of the two lifting assemblies in the lifting mechanism, allowing the vehicle to be lifted smoothly under the action of the two lifting assemblies, and improving the stability and reliability of the lifting process of the vehicle.

In some embodiments, the first transmission assembly includes a first driving wheel connected to the driving mechanism; a first driven wheel connected to the first lifting assembly; and a first chain sleeved on the first driving wheel and the first driven wheel.

In the above solution, the transmission of the driving mechanism and the first lifting assembly is realized through a chain structure, and the structure is simple and reliable. At the same time, without changing the driving mechanism, the diameter ratio of the first driving wheel and the first driven wheel can be changed by replacing the first driving wheel or the first driven wheel, thereby adjusting the lifting speed of the vehicle by the first lifting assembly to suit needs of different battery swapping stations.

In some embodiments, the second transmission assembly includes a second driving wheel connected to the driving mechanism; a second driven wheel connected to the second lifting assembly; a second chain sleeved on the second driving wheel and the second driven wheel, and the first driving wheel and the second driving wheel are coaxially connected to the driving mechanism to move synchronously.

In the above solution, the first driving wheel and the second driving wheel that are coaxially arranged can guarantee the synchronous rotation of the first driving wheel and the second driving wheel, thereby causing the first transmission assembly and the second transmission assembly to move synchronously, and thus the synchronous movement of the first lifting assembly and the second lifting assembly, to improve the transmission reliability.

In some embodiments, the first transmission assembly further includes a first transmission shaft and two first output wheels, the first driven wheel is sleeved on the first transmission shaft, and the two first output wheels are arranged on the first transmission shaft and spaced apart along an axial direction of the first transmission shaft; two first lifting assemblies are provided, and the two first output wheels are connected to the two first lifting assemblies respectively, to drive the two first lifting assemblies to move synchronously.

In the above solution, with the first output wheel, the first transmission assembly and the first lifting assembly are connected in a transmission way. At the same time, two first lifting assemblies are provided, thereby improving the support capacity for the vehicle and improving the reliability of the lifting device. And the two first lifting assemblies and the first transmission shaft can synchronously rotate through the first output shaft, ensuring that the two first lifting assemblies can move synchronously.

In some embodiments, the two first output wheels are provided at two ends of the first transmission shaft in the axial direction of the first transmission shaft, respectively.

In the above solution, the risk of interference between the first lifting assembly and the first transmission shaft can be reduced, and the probability of failure during the lifting process can be reduced.

In some embodiments, the first transmission shaft includes a plurality of sections, and two adjacent sections of the plurality of sections are coaxially connected through a coupling assembly.

In the above solution, the axial length of the first transmission shaft is increased. On this basis, in order to guarantee the reliability of the connection between two adjacent sections, the coupling assembly is provided. The coupling assembly realizes the connection between the two adjacent sections, and at the same time, the coupling assembly also ensures that the two adjacent sections are coaxially provided to ensure that the plurality of sections in the first transmission shaft can coaxially rotate.

In some embodiments, the first transmission shaft includes a first part, a connecting part and a second part arranged in sequence along its own axial direction, the first driven wheel is arranged on the first part, and the two first output wheels are arranged on the first part and the second part, respectively.

The coupling assembly includes a first coupling assembly disposed between the first part and the connecting part, and a second coupling assembly disposed between the second part and the connecting part, and the first part and the second part are coaxially disposed through the first coupling assembly and the second coupling assembly.

In the above solution, it is beneficial to disassemble the first transmission shaft. When a part in the first transmission shaft or the first output wheel is damaged, there is no need to replace the entire first transmission shaft, only a corresponding part on the first transmission shaft needs to be replaced or repaired which reduces the difficulty of subsequent maintenance.

In some embodiments, the first coupling assembly includes a first mounting hole and a first key slot extending through it along the axial direction of the first transmission shaft and communicated with each other; a first installation key is provided at one end of the first part close to the connecting part, the first part is connected to the first key slot through the first installation key, a second installation key is provided at one end of the connecting part close to the first part, and the connecting part is connected to the first key slot through the second installation key.

In the above solution, the first coupling assembly is sleeved on the first part and the connecting part through the first mounting hole, and is fixed to the first part and the connecting part through the first key slot. The structure is simple and reliable.

In some embodiments, the second transmission assembly further includes a second transmission shaft disposed on the second driven wheel and moving synchronously with the second driven wheel. The transmission mechanism also includes a first bearing seat rotatably connected with the first transmission shaft, and a second bearing seat rotatably connected with the second transmission shaft, the first bearing seat and the second bearing seat are fixed on a preset plane to support the first transmission shaft and the second transmission shaft, respectively.

In the above solution, the first bearing seat and the second bearing seat are provided to support the first transmission shaft and the second transmission shaft respectively, thereby reducing the risk of bending of the first transmission shaft and the second transmission shaft caused by the reaction force of the first lifting assembly and the second lifting assembly and increasing the service life of the first transmission shaft and the second transmission shaft.

In some embodiments, a plurality of first bearing seats are provided and spaced apart along the axial direction of the first transmission shaft, a plurality of second bearing seats are provided and spaced apart along the axial direction of the second transmission shaft, and the plurality of first bearing seats and the plurality of second bearing seats are arranged correspondingly in the first direction.

In the above solution, the plurality of first bearing seats are spaced apart in the axial direction of the first transmission shaft, allowing that the first transmission shaft can be supported at different positions. The plurality of second bearing seats are spaced apart in the axial direction of the second transmission shaft, allowing that the second transmission shaft is supported at different positions.

In some embodiments, the transmission mechanism further includes a tensioning assembly with a tensioning wheel, and the tensioning wheel is abutted against the first chain to adjust a tension of the first chain.

In the above solution, the tensioning wheel is abutted against the first chain and exerts a tensioning force on the first chain to change the tension of the first chain.

In some embodiments, the tensioning assembly includes an adjustment mechanism connected to the tensioning wheel, and the adjustment mechanism is configured to change a position of the tensioning wheel in the lifting direction.

In the above solution, the adjustment mechanism is connected to the tensioning wheel and can drive the tensioning wheel to move along the lifting direction, thereby changing the magnitude of the tensioning force exerted by the tensioning wheel on the first chain.

In some embodiments, the adjustment mechanism includes a fixed plate, a sliding plate slidably connected to the fixed plate along the lifting direction, and the tensioning wheel is fixed to the sliding plate.

In the above solution, the adjustment mechanism includes the fixed plate and the sliding plate. The fixed plate can be provided on a preset plane and remains fixed. The sliding plate is slidably connected to the fixed plate and drives the tensioning wheel to move synchronously, thereby changing the position of the tensioning wheel in the lifting direction to adjust the tension on the first chain.

In some embodiments, at least one of the fixed plate and the sliding plate includes a plurality of second mounting holes arranged side by side along the lifting direction, and the fixed plate and the sliding plate are fixed with each other through the second mounting holes.

In the above solution, the fixed plate and the sliding plate are fixedly connected through the second mounting hole, thereby ensuring that the tensioning wheel connected to the sliding plate remains fixed during operation.

In some embodiments, the first chain forms a closed-loop structure, a plurality of tensioning assemblies are provided, tensioning wheels of at least some of the tensioning assemblies are located within the closed-loop structure, and tensioning wheels of at least some of the tensioning assemblies are located outside the closed-loop structure.

In the above solution, the tensioning wheels located inside the closed-loop structure and the tensioning wheels located outside the closed-loop structure apply tensioning forces in different directions to the first chain. During the movement of the first chain, the tensioning forces in different directions can help the first chain better maintain its own tension and improve reliability.

In some embodiments, the plurality of the tensioning assemblies are spaced apart along the first direction; the tensioning wheels of adjacent tensioning assemblies are located on both an inner side and an outer side of the closed-loop structure.

In the above solution, during the movement of the first chain, since the adjacent tensioning wheels are located on inner and outer sides of the closed-loop structure, when a tension force of a single tensioning wheel is applied on one side of the first chain, the first chain can immediately move to the position of the adjacent tensioning wheel, the other side of the first chain is also subject to the tension force, ensuring that the forces on two sides of the first chain are balanced and improving the service life of the first chain.

In a second aspect, embodiments of the present disclosure provide a battery swapping station configured to replace a battery of an electrical apparatus and including the lifting device according to any one of the above embodiments.

The above description is only an overview of the technical solution of the present disclosure. In order to better understand the technical means of the present disclosure, it can be implemented according to the contents of the description, and in order to make the above and other purposes, features and advantages of the present disclosure more obvious and understandable, specific implementation manner of the present disclosure will be described below.

### BRIEF DESCRIPTION OF THE DRAWINGS

In order to more clearly illustrate technical solutions of embodiments of the present disclosure, drawings required to be used in the embodiments of the present disclosure will be briefly introduced below. Obviously, the drawings described below are only some embodiments of the present disclosure, and those skilled in the art can also obtain other drawings based on the drawings without creative efforts.
FIG. 1 is a schematic structural diagram of a vehicle provided in embodiments of the present disclosure;
FIG. 2 is a schematic structural diagram of a battery swapping station provided in embodiments of the present disclosure;
FIG. 3 is a schematic structural diagram of a lifting device provided in embodiments of the present disclosure;
FIG. 4 is a schematic diagram of a fitting relationship between a driving mechanism and a transmission mechanism in a lifting device provided in embodiments of the present disclosure;
FIG. 5 is an enlarged structural view of an area P shown in FIG. 4;
FIG. 6 is a structural schematic diagram of a transmission mechanism in a lifting device provided in embodiments of the present disclosure;
FIG. 7 is a schematic structural diagram of a first transmission shaft in a lifting device provided in embodiments of the present disclosure;
FIG. 8 is a structural schematic diagram of a first coupling assembly in a lifting device provided in embodiments of the present disclosure;
FIG. 9 is another schematic diagram of a fitting relationship between a driving mechanism and a transmission mechanism in a lifting device provided in embodiments of the present disclosure;
FIG. 10 is another structural schematic diagram of a transmission mechanism in a lifting device provided in embodiments of the present disclosure;
FIG. 11 is an enlarged structural view of an area Q shown in FIG. 10.

### Reference numbers of specific implementation

1. Vehicle; 11. Battery; 12. Controller; 13. Motor;
2. Lifting device;
3. Driving mechanism;
4. Lifting mechanism; 41. First lifting assembly; 42. Second lifting assembly;
5. Transmission mechanism; 51. First transmission assembly; 511. First driving wheel; 512. First driven wheel; 513. First chain; 514. First transmission shaft; 5141. First part; 5142. Second part; 5143. Connecting part; 515. First output wheel; 52. Second transmission assembly; 521. Second driving wheel; 522. Second driven wheel; 523. Second chain; 524. Second transmission shaft; 53. Coupling assembly; 531. First coupling assembly; 5311. First mounting hole; 5312. First key slot; 532. Second coupling assembly; 541. First bearing seat; 542. Second bearing seat; 55. Tensioning assembly; 551. Tensioning wheel; 552. Adjustment mechanism; 5521. Fixed plate; 5522. Sliding plate; 5523. Second mounting hole;
X. First direction.

### DETAILED DESCRIPTION

Embodiments of technical solutions of the present disclosure will be described in detail below in conjunction with accompanying drawings. Following embodiments are only used to illustrate the technical solutions of the present disclosure more clearly, and therefore are only examples, rather than limiting the protection scope of the present disclosure.

Unless otherwise defined, all technical and scientific terms used in the present disclosure have the same meaning as those normally understood by skilled in the art. Terms used in the text are for purposes of describing specific embodiments only and are not intended to restrict the present disclosure. Terms "including" and "having" and any variation thereof in the description, claims and the above drawings of the present disclosure are intended to cover non-exclusive inclusion.

In the description of embodiments of the present disclosure, technical terms "first", "second", etc. are used to distinguish between different objects and cannot be understood to indicate or imply relative importance or implicitly indicate the number, a particular order or primary or secondary relationship of indicated technical features. In the description of embodiments of the present disclosure, unless otherwise specifically defined, the term "plurality" means two or more.

Reference to "embodiments" in the text means that a particular feature, structure or characteristic described in conjunction with embodiments may be included in at least one embodiment of the present disclosure. The phrase appearing at various points in the specification does not necessarily refer to the same embodiment, nor is it a separate or alternative embodiment that is mutually exclusive with other embodiments. It is understood explicitly and implicitly by those skilled in the art that the embodiments described herein can be combined with other embodiments.

In the description of embodiments of the present disclosure, the term "and/or" is only an association relationship describing associated objects, indicating that there can be three kinds of relationships, for example, A and/or B, can mean three cases that: there is A alone, there is A and B simultaneously, and there is B alone. In addition, the character "/" in the text generally indicates that the associated objects are in an "or" relationship.

In the description of embodiments of the present disclosure, the term "plurality" refers to two or more (including two), similarly, "multiple groups" refers to two or more groups (including two groups), and "multiple pieces" refers to two or more pieces (including two pieces).

In the description of embodiments of the present disclosure, orientations or positional relationship indicated by technical terms "center", "longitudinal", "lateral", "length", "width", "thickness", "upper", "lower", "front", "rear", "left", "right", "vertical" "horizontal", "top", "bottom", "inner", "outer", "clockwise", "counterclockwise", "axial", "radial", "circumferential", etc. are based on orientations or positional relationship indicated in the drawings, is only for the convenience of describing the embodiments of the present disclosure and simplifying the description, and does not indicate or imply that the device or element referred to must have a specific orientation, be constructed and operated in a specific orientation, and therefore cannot be understood as limitations to the embodiments of the present disclosure.

In the description of embodiments of the present disclosure, unless otherwise clearly stated or defined, technical terms "installation", "connected to", "connected with", "attachment" and the like are to be understood broadly, and may be, for example, a fixed connection, a detachable connection, or an integral connection; also a mechanical connection or an electric connection; they can be connected directly or indirectly through an intermediate medium or an internal communication between two elements or an interaction relationship between two elements. The specific meaning of the above terms in the present disclosure can be understood by those skilled in the art according to actual circumstance.

In the present disclosure, a battery refers to a physical module that includes one or more battery cells to provide electrical energy. For example, the battery mentioned in the present disclosure may include a battery module or a battery pack. The battery generally includes a box for packaging one or more battery cells. The box can prevent liquid or other foreign matter from affecting the charging or discharging of the battery cells.

Alternatively, the battery cells may include lithium ion secondary batteries, lithium ion primary batteries, lithium sulfur batteries, sodium lithium ion batteries, sodium ion batteries or magnesium ion batteries, etc., which are not limited in the embodiments of the present disclosure. The battery cells may be in the shape of a cylinder, a flat body, a rectangular parallelepiped or other shapes, and the embodiments of the present disclosure are not limited thereto. The battery cells are generally divided into three types according to packaging methods: cylindrical battery cells, rectangular battery cells and soft-pack battery cells, and the embodiments of the present disclosure are not limited thereto.

In order to meet different power requirements, the battery may include a plurality of battery cells. The plurality of battery cells may be connected in series, in parallel, or in mixed connection. The mixed connection refers to a mixture of the series connection and the parallel connection. Optionally, the plurality of battery cells can be first connected in series, parallel, or mixed to form a battery module, and then a plurality of battery modules can be connected in series, parallel, or mixed to form a battery. In other words, the plurality of battery cells can directly form the battery; or, they can first form the battery module, and then the battery modules can form the battery. The battery is then mounted in the vehicle to provide electric energy to the vehicle.

With the development of new energy technology, the number of devices using batteries has increased. When an electrical device runs out of power, it is often replenished by connecting a charging device. For example, an electric vehicle can be connected to a charging pile for charging. The method of connecting charging equipment, such as the charging pile, to replenish electric energy, will take a long time and affect the user's experience. In order to quickly replenish energy for the electric vehicle with insufficient energy, the inventors have developed a battery swapping station in which a battery with insufficient energy in the vehicle can be directly replaced with a battery with sufficient energy. The entire battery swapping process takes a short time, which can greatly save battery charging time, will not affect the user's use of the vehicle, and greatly improves the user's experience.

Currently, batteries in many types of vehicles on the market are mounted in a chassis of the vehicle. Since the distance between the chassis and the ground is small, the chassis needs to be lifted to facilitate the replacement of the battery. During this process, due to the large weight of the vehicle, a plurality of lifting assemblies need to be set up to support the vehicle and move synchronously for driving the vehicle to be lifted. However, how to ensure that the plurality of lifting assemblies move synchronously is an urgent problem that needs to be solved now.

In view of this, embodiments of the present disclosure provide a lifting device for a battery swapping station, in which a first lifting assembly and a second assembly can be ensured to move synchronously to improve a lifting stability of the lifting device.

The lifting device for a battery swapping and the battery swapping station disclosed in the embodiments of the present disclosure can be used to, but not limited to, replace batteries of a vehicle, and can also be used to replace batteries of other electrical equipment, such as electrical toys, electrical tools, battery cars, electrical automobiles, ships, spacecraft, etc. The vehicle can be a fuel powered vehicle, a gas powered vehicle, or a new energy vehicle. The new energy vehicles can be a pure electric vehicle, a hybrid electric vehicle, or an extended range vehicle, etc. The spacecraft includes an airplane, a rocket, a space shuttle, and a spaceship, etc. The electrical toys can include fixed or mobile ones, for example, game consoles, electrical car toys, electric ship toys and electrical airplane toys, etc.; the electrical tools can include metal cutting electric tools, grinding electric tools, assembly electric tools, and railway electric tools, such as electric drills, electric grinders, electric wrenches, electric screwdrivers, electric hammers, impact drills, concrete vibrators, and electric planers. etc.

The following description takes an electrical apparatus as a vehicle as an example.

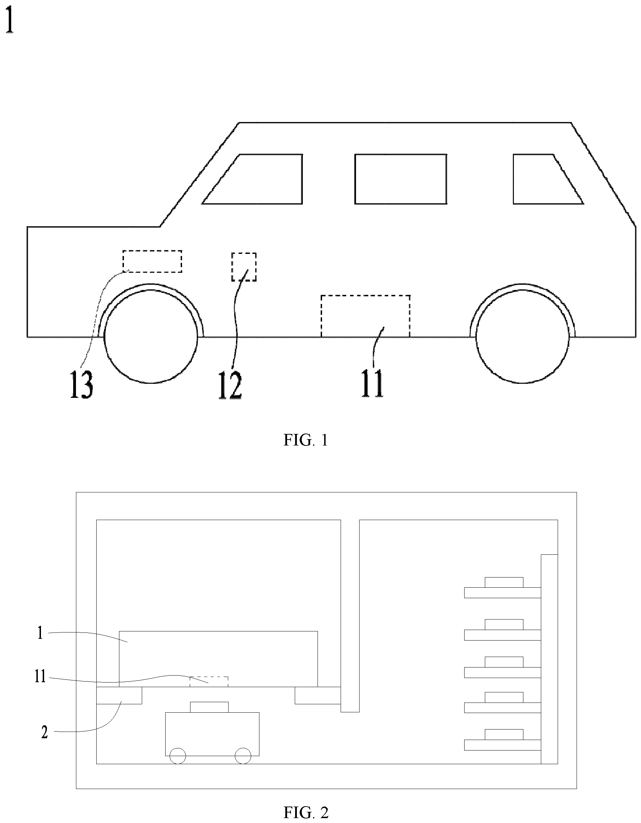

Referring to FIG. 1, a vehicle 1 is provided with a battery 11, and the battery 11 can be provided in the bottom, head, or tail of the vehicle 1. The battery 11 may be configured for supplying power for the vehicle 1. For example, the battery 11 may be provided in the chassis of the vehicle 1 as an operating power source of the vehicle 1.

The vehicle 1 may also include a controller 12 and a motor 13. The controller 12 is configured to control the battery 11 to provide power to the motor 13, for example, for starting, navigating and driving the vehicle 1 to meet power requirements.

In some embodiments of the present disclosure, the battery 11 can not only be configured as an operating power source for the vehicle 1, but also can be configured as a driving power source for the vehicle 1, replacing or partially replacing fuel or natural gas to provide driving power for the vehicle 1.

Referring to FIG. 2, a battery swapping station may include a lifting device 2, a mobile battery swapping device and a battery storage system. The vehicle 1 can move to a battery swapping platform and the battery 11 can be replaced on a lifting function module. In this process, a fully charged battery in the battery storage system will be mounted on the vehicle 1, while the battery with insufficient energy and originally located on the vehicle 1 will be transferred to the battery storage system for charging.

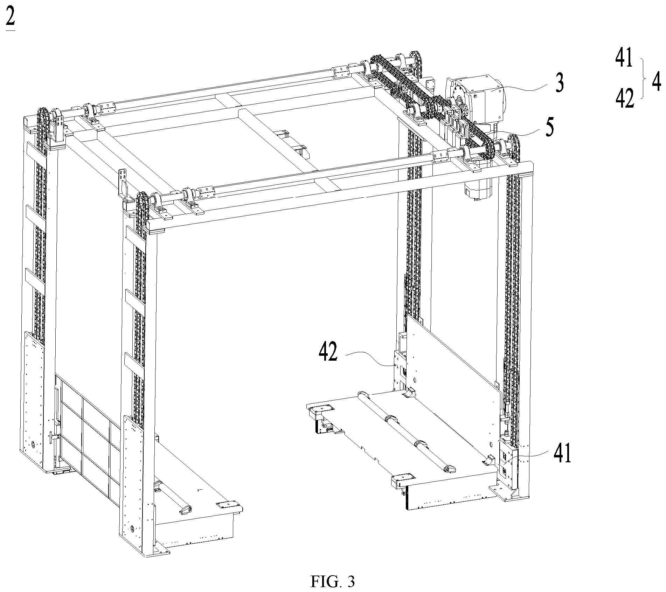

Specifically, please refer to FIG. 3. After the vehicle moves to the lifting device 2 and is positioned in place, the lifting device 2 is triggered to lift the vehicle. When the vehicle is lifted, the mobile battery swapping device can move under the vehicle to take out the battery to be charged in the vehicle, and move it to the battery storage system for charging. At the same time, the fully charged battery in the battery storage system is placed in the mobile battery swapping device and transported to the vehicle, thereby completing the battery replacement. Then the lifting device 2 drives the vehicle down to the initial position so that the vehicle can drive out of the lifting function module.

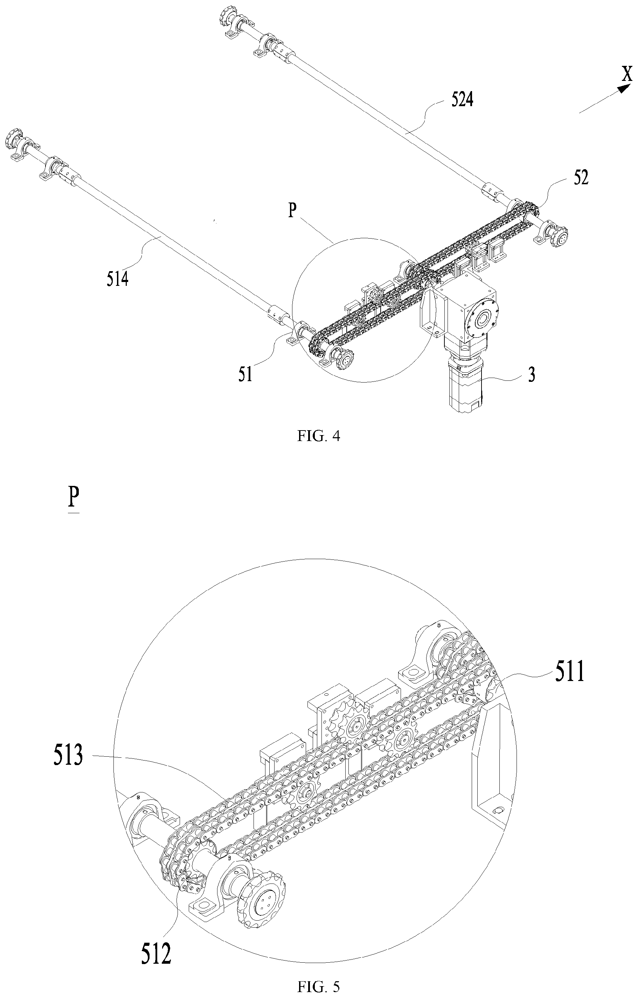

Please refer to FIGS. 3 and 4. The lifting device of the battery swapping station provided in embodiments of the present disclosure includes a driving mechanism 3, a lifting mechanism 4 and a transmission mechanism 5.The lifting mechanism 4 includes a first lifting assembly 41 and a second lifting assembly 42. The first lifting assembly 41 and the second lifting assembly 42 are arranged on two sides of the driving mechanism 3 along the first direction X respectively, and are configured for lifting an electrical apparatus. The first direction X is perpendicular to a lifting direction of the electrical apparatus.

The transmission mechanism 5 includes a first transmission assembly 51 and a second transmission assembly 52. The first transmission assembly 51 is connected to both the driving mechanism 3 and the first lifting assembly 41. The second transmission assembly 52 is connected to both the driving mechanism 3 and the second lifting assembly 42. The driving mechanism 3 drives the first lifting assembly 41 and the second lifting assembly 42 to move synchronously through the first transmission assembly 51 and the second transmission assembly 52, respectively.

The driving mechanism 3 can provide power to the transmission mechanism 5 and drive the lifting mechanism 4 to move through the transmission mechanism 5 to lift the vehicle. The driving mechanism 3 can provide power through a power source, such as a motor, or a rotating cylinder.

The lifting mechanism 4 can directly contact the vehicle to drive the vehicle to be lifted or lowered. The lifting mechanism 4 includes the first lifting assembly 41 and the second lifting assembly 42. The first lifting assembly 41 and the second lifting assembly are arranged to be opposite to each other along the first direction X, thereby providing support at different positions of the chassis of the vehicle to achieve the lifting function. For example, the lifting mechanism 4 includes a lifting arm for lifting the vehicle and a support plate provided on the side of the lifting arm close to the chassis.

The transmission mechanism 5 is configured to transmit the power provided by the driving mechanism 3 to the lifting mechanism 4. The transmission mechanism 5 includes the first transmission assembly 51 and the second transmission assembly 52. The first transmission assembly 51 is configured to realize the transmission between the driving mechanism 3 and the first transmission assembly 52. The second transmission assembly 52 is used to realize the transmission between the driving mechanism 3 and the second lifting assembly 42. The structure of the first transmission assembly 51 may be the same as the structure of the second transmission assembly 52, or may be different from the structure of the second transmission assembly 52, which is not limited in the embodiments of the present disclosure as long as the driving mechanism 3 can drive the first lifting assembly 41 and the second lifting assembly 42 to move synchronously through the first transmission assembly 51 and the second transmission assembly 52, respectively.

In embodiments of the present disclosure, the transmission between the driving mechanism 3 and the lifting mechanism 4 is realized by the transmission mechanism 5. At the same time, the transmission mechanism 5 includes two transmission assemblies for the synchronous movement of the two lifting assemblies in the lifting mechanism 4, allowing the vehicle to be lifted smoothly under the action of the two lifting assemblies, and improving the stability and reliability of the lifting process of the vehicle.

In some embodiments, referring to FIGS. 4 and 5, the first transmission assembly 51 includes a first driving wheel 511, a first driven wheel 512 and a first chain 513. The first driving wheel 511 is connected to the driving mechanism 3, the driven wheel 512 is connected to the first lifting assembly 41, and the first chain 513 is sleeved on the first driving wheel 511 and the first driven wheel 512.

The first driving wheel 511 is connected to the driving mechanism 3. The driving mechanism 3 can directly transmit power to the first driving wheel 511 to drive the first driving wheel 511 to rotate. The first chain 513 is sleeved on the first driving wheel 511 and engaged with the first driving wheel 511 in a transmission way. The first driving wheel 511 rotates to drive the first chain 513 to move; at the same time, the first chain 513 can drive the first driven wheel 512 to rotate. The first driven wheel 512 rotates to drive the first lifting assembly 41 to move, thereby driving the vehicle to be lifted or lowered. The rotation direction of the first driving wheel 511 and the first driven wheel 512 is the same, the rotation speed of the first driven wheel 512 depends on the rotation speed of the first driving wheel 511, and the diameter between the first driving wheel 511 and the first driven wheel 512 is not limited in the embodiments of the present disclosure.

In the embodiments of the present disclosure, the transmission of the driving mechanism 3 and the first lifting assembly 41 is realized through a chain structure, and the structure is simple and reliable. At the same time, without changing the driving mechanism 3, the diameter ratio of the first driving wheel 511 and the first driven wheel 512 can be changed by replacing the first driving wheel 511 or the first driven wheel 512, thereby adjusting the lifting speed of the vehicle by the first lifting assembly 41 to suit needs of different battery swapping stations.

In some embodiments, referring to FIGS. 3, 4 and 6, the second transmission assembly 52 includes a second driving wheel 521, a second driven wheel 522 and a second chain 523. The second driving wheel 521 is connected to the driving mechanism 3. The second driven wheel 522 is connected to the second lifting assembly 42, and the second chain 523 is sleeved on the second driving wheel 521 and the second driven wheel 522. The first driving wheel 511 and the second driving wheel 521 are coaxially connected to the driving mechanism 3 to achieve synchronous movement.

The structures of the second transmission assembly 52 and the first transmission assembly 51 are similar, and will not be described again in the embodiments of the present disclosure. Optionally, the first driving wheel 511 and the second driving wheel 521 have the same diameter teeth, the first driven wheel 512 and the second driven wheel 522 have the same diameter teeth, and the first chain 513 and the second chain 523 have the same length.

The first driving wheel 511 and the second driving wheel 521 are coaxially connected to the driving mechanism 3. For example, the driving mechanism 3 includes a driving shaft. Both the first driving wheel 511 and the second driving wheel 521 are sleeved on the driving shaft and rotate synchronously with the driving shaft. The coaxial arrangement of the first driving wheel 511 and the second driving wheel 521 can ensure the synchronous rotation of the first driving wheel 511 and the second driving wheel 521, thereby causing the first transmission assembly 51 and the second transmission assembly 52 to move synchronously, and thus the synchronous movement of the first lifting assembly 41 and the second lifting assembly 42 to improve the transmission reliability.

In some embodiments, referring to FIGS. 3, 4 and 7, the first transmission assembly 51 also includes a first transmission shaft 514 and two first output wheels 515. The first driven wheel 512 is sleeved on the first transmission shaft 514. The two first output wheels 515 are arranged on the first transmission shaft 514 to be spaced apart along the axial direction of the first transmission shaft 514. Two first lifting assemblies 41 are provided, and the two first output shafts are connected with the two first lifting assemblies 41 respectively, to drive the two first lifting assemblies 41 to move synchronously.

The first transmission shaft 514 is installed on the first driven wheel 512 and rotates synchronously with the first driven wheel 512. Two first output wheels 515 are arranged on the first transmission shaft 514 to be spaced apart along the axial direction of the first transmission shaft 514. The two first output shafts may be disposed on the same side of the first driven wheel 512, or may be disposed on different sides of the first driven wheel 512, which is not limited in the embodiments of the present disclosure.

The two first lifting assemblies 41 are connected to the first transmission shaft 514 through two first output wheels 515, respectively. Optionally, the first output shaft is a gear structure, and the first lifting assembly 41 includes a chain structure connected with the first output shaft in a transmission way, the first transmission assembly 51 and the first output wheel 515 drive the first lifting assembly 41 to drive the vehicle to be lifted or lowered.

It should be noted that the second transmission assembly 52 may also include a second transmission shaft 524 and two second output wheels. The first transmission shaft 514 and the second transmission shaft 524 are arranged in parallel, and the second driven wheel 522 is sleeved on the second transmission shaft 524. The two second output wheels are arranged on the second transmission shaft 524 to be spaced apart along the axial direction of the second transmission shaft 524, and are connected to the two second lifting assemblies 42. For the structures of the second transmission shaft 524 and the second output wheel, reference may be made to the structures of the first transmission shaft 514 and the first output wheel 515, which will not be described again in the embodiments of the present disclosure.

In the embodiments of the present disclosure, with the first output wheel 515, the first transmission assembly 51 and the first lifting assembly 41 are connected in a transmission way. At the same time, two first lifting assemblies 41 are provided, thereby improving the support capacity for the vehicle and improving the reliability of the lifting device. And the two first lifting assemblies 41 and the first transmission shaft 514 can synchronously rotate through the first output shaft, ensuring that the two first lifting assemblies 41 can move synchronously.

In some embodiments, two first output wheels 515 are disposed on two sides of the first transmission shaft 514 in the axial direction of the first transmission shaft 514, respectively.

The axial direction of the first transmission shaft 514 is the extension direction of the first transmission shaft 514. The axial direction of the first transmission shaft 514 intersects both the first direction X and the lifting direction. Optionally, any two of the axial direction the first transmission shaft 514, the first direction X and the lifting direction are perpendicular to each other.

The first transmission shaft 514 includes two ends opposite to each other in its axial direction. Two first output wheels 515 are disposed on two ends of the first transmission shaft 514 respectively, and are connected with the two first lifting assemblies 41 in a transmission way. This design can reduce the risk of interference between the first lifting assembly 41 and the first transmission shaft 514 and reduce the probability of failure during the lifting process.

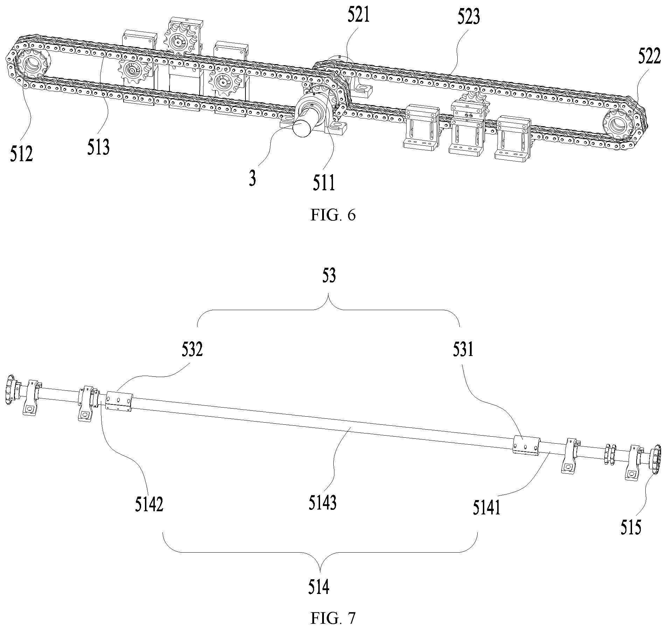

In some embodiments, referring to FIGS. 3 and 7, the first transmission shaft 514 includes a plurality of sections, and two adjacent sections in the plurality of sections are coaxially connected through a coupling assembly 53.

The first transmission shaft 514 needs to be connected with the two first lifting assemblies 41 in a transmission way. The two first lifting assemblies 41 are spaced apart in the axial direction of the first transmission shaft 514. In order to avoid interference occurring between the two first lifting assemblies 41, it is necessary to ensure that the first transmission shaft 514 has a certain axial length. Therefore, in the embodiments of the present disclosure, the first transmission shaft 514 is configured into a plurality of sections that are connected, thereby increasing the axial length of the first transmission shaft 514.

On this basis, in order to ensure the reliability of the connection between two sections that are adjacent, in the embodiments of the present disclosure, the coupling assembly 53 is provided. The coupling assembly 53 connects the two adjacent sections; at the same time, the coupling assembly 53 can also ensure that two adjacent sections are coaxially arranged to ensure that the plurality of sections of the first transmission shaft 514 can coaxially rotate.

In some embodiments, referring to FIG. 3 and FIG. 7, the first transmission shaft 514 includes a first part 5141, a connecting part 5143 and a second part 5142 that are arranged sequentially along its axial direction. The first driven wheel 512 is arranged on the first part 5141. Two first output wheels 515 are provided on the first part 5141 and the second part 5142, respectively.

The coupling assembly 53 includes a first coupling assembly 531 disposed between the first part 5141 and the connecting part 5143, and a second coupling assembly 532 disposed between the second part 5142 and the connecting part 5143. The first part 5141 and the second part 5142 are coaxially arranged through both the first coupling assembly 531 and the second coupling assembly 532.

The first part 5141 is configured to install one of the first output wheels 515, the second part 5142 is configured to install the other one of the first output wheels 515, and the connecting part 5143 is configured to connect the first part 5141 and the second part 5142. At the same time, the connecting part 5143 is configured to increase the distance between the first part 5141 and the second part 5142 so that the two first lifting assemblies 41 do not interfere with each other.

The first coupling assembly 531 connects the first part 5141 and the connecting part 5143 together, while making the first part 5141 and the connecting part 5143 coaxially arranged. The second coupling assembly 532 connects the second part 5142 and the connecting part 5143 together, while making the second part 5142 and the connecting part 5143 coaxially arranged. Further, the first part 5141 and the second part 5142 are coaxially arranged through the first coupling assembly 531 and the second coupling assembly 532.

In the embodiments of the present disclosure, the first transmission shaft 514 is divided into three sections: the first part 5141, the second part 5142, and the connecting part 5143. At the same time, the two first output wheels 515 are disposed on the first part 5141 and the second part 5142, respectively. This design is beneficial to disassemble the first transmission shaft 514. When a part in the first transmission shaft 514 or the first output wheel 515 is damaged, there is no need to replace the entire first transmission shaft 514, only a corresponding part on the first transmission shaft 514 needs to be replaced or repaired which reduces the difficulty of subsequent maintenance. It should be noted that the structure of the second transmission shaft 524 in the second transmission assembly 52 may be the same as or different from the structure of the first transmission shaft 514, which is not limited in the embodiments of the present disclosure.

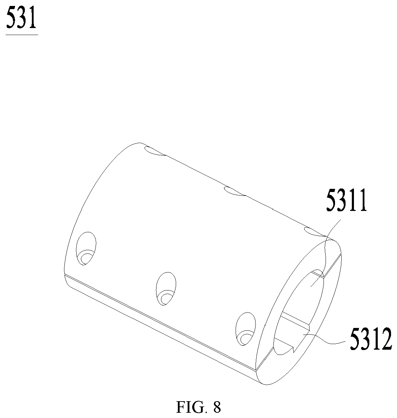

In some embodiments, referring to FIGS. 7 and 8, the first coupling assembly 531 includes a first mounting hole 5311 and a first key slot 5312 through it along the axial direction of the first transmission shaft 514. The first mounting hole 5311 and the first key slot 5312 are communicated with each other. A first installation key is provided at the end of the first part 5141 close to the connecting part 5143. The first part 5141 is connected to the first key slot 5312 through the first installation key. A second installation key is provided at the end of the connecting part 5143 close to the first part 5141. The connecting part 5143 is connected to the first key slot 5312 through the second installation key.

The first mounting hole 5311 and the first key slot 5312 are provided inside the first coupling assembly 531. The first coupling assembly 531 is sleeved on the first part 5141 and the connecting part 5143 through the first mounting hole 5311. The first part 5141 and the connecting part 5143 are provided with the first installation key and the second installation key, respectively. Both the first installation key and the second installation key can be embedded in the first key slot 5312, so that both the first part 5141 and the connecting part 5143 stay stationary relative to the first coupling assembly 531 and move synchronously. Optionally, the structure of the second coupling assembly 532 is similar to the structure of the first coupling assembly 531.

In addition, the first coupling assembly 531 can be formed by two parts fixed by a bolt. This design can guarantee the structural stability of the first coupling assembly 531 and at the same time reduce the installation difficulty of the first coupling assembly 531 with the first part 5141 and the connecting part 5143.

In the embodiments of the present disclosure, the first coupling assembly 531 is sleeved on the first part 5141 and the connecting part 5143 through the first mounting hole 5311, and is relatively fixed with the first part 5141 and the connecting part 5143 through the first key slot 5312. The structure is simple and reliable.

In some embodiments, referring to FIGS. 3, 4 and 9, the second transmission assembly 52 further includes a second transmission shaft 524 disposed on the second driven wheel 522 and moving synchronously with the second transmission wheel. The transmission mechanism 5 also includes a first bearing seat 541 that is rotatably connected to the first transmission shaft 514, and a second bearing seat 542 that is rotatably connected to the second transmission shaft 524. The first bearing seat 541 and the second bearing seat 542 are fixed on a preset plane to support the first transmission shaft 514 and the second transmission shaft 524.

As can be seen from the foregoing content, the first transmission shaft 514 and the second transmission shaft 524 are configured to transmit the power of the driving mechanism 3 to the first lifting assembly 41 and the second lifting assembly 42 respectively, so as to lift or lower the vehicle. During this process, the first transmission shaft 514 and the second transmission shaft 524 will receive reaction forces from the first lifting assembly 41 and the second lifting assembly 42, respectively.

On this basis, in the embodiments of the present disclosure, the first bearing seat 541 and the second bearing seat 542 provided are configured to support the first transmission shaft 514 and the second transmission shaft 524 respectively, reduce the risk of the bending of the first transmission shaft 514 and the second transmission shaft 524 caused by the reaction forces applied by the first lifting assembly 41 and the second lifting assembly 42, and increases the service life of the first transmission shaft 514 and the second transmission shaft 524.

It should be noted that the first bearing seat 541 and the second bearing seat 542 can be fixed on the same preset plane, or they can be fixed on different preset planes, which is not limited in the embodiments of the present disclosure.

In some embodiments, a plurality of first bearing seats 541 are provided and spaced apart along the axial direction of the first transmission shaft 514. A plurality of second bearing seats 542 are provided and spaced part along the axial direction of the second transmission shaft 524. The plurality of first bearing seats 541 and the plurality of second bearing seats 542 are arranged correspondingly in the first direction X.

The plurality of first bearing seats 541 are configured to support one first transmission shaft 514, and the plurality of second bearing seats 542 are configured to support one second transmission shaft 524. In the embodiments of the present disclosure, the plurality of first bearing seats 541 are spaced apart in the axial direction of the first transmission shaft 514 to ensure that the first transmission shaft 514 can be supported at different positions. The plurality of second bearing seats 542 are spaced apart in the axial direction of the second transmission shaft 524 to ensure that the second transmission shaft 514 can be supported at different positions.

In addition, the plurality of first bearing seats 541 and the plurality of second bearing seats 542 are arranged correspondingly in the first direction. This design can ensure that the first transmission shaft 514 and the second transmission shaft 524 can be supported at corresponding positions by the bearing seat 541 and the second bearing seat 542 respectively, thereby improving the support reliability.

In some optional embodiments, referring to FIGS. 3, 7 and 9, at least some of the first bearing seats 541 are provided on the first part 5141 and the second part 5142, and the first lifting assembly 41 is directly connected to both the first output wheels 515 on the first part 5141 and on the second part 5142 in a transmission way, so the first part 5141 and the second part 5142 are more likely to bend relative to the connecting part 5143. Thus the first bearing seats 541 are provided on the first part 5141 and the second part 5142 to further reduce the risk of bending of the first transmission shaft 514.

In some embodiments, referring to FIGS. 3, 4 and 10, the transmission mechanism 5 also includes a tensioning assembly 55. The tensioning assembly 55 includes a tensioning wheel 551 abutted against the first chain 513 and configured to adjust the tension of the first chain 513.

In order to ensure the transmission reliability between each of the first driving wheel 511 and the first driven wheel 512 and the first chain 513, in the embodiments of the present disclosure, the tensioning wheel 551 is provided. The tensioning wheel 551 is abutted against the first chain 513 and applies tension to the first chain 513 to change the tension of the first chain 513. The tensioning wheel 551 may be located within the closed-loop structure formed by the first chain 513, or may be located outside the closed-loop structure, which is not limited in the embodiments of the present disclosure.

It should be noted that the second chain 523 in the second transmission assembly 52 may also be provided with a corresponding tensioning assembly 55, and the tensioning wheel 551 in the tensioning assembly 55 is configured to adjust the tension of the second chain 523.

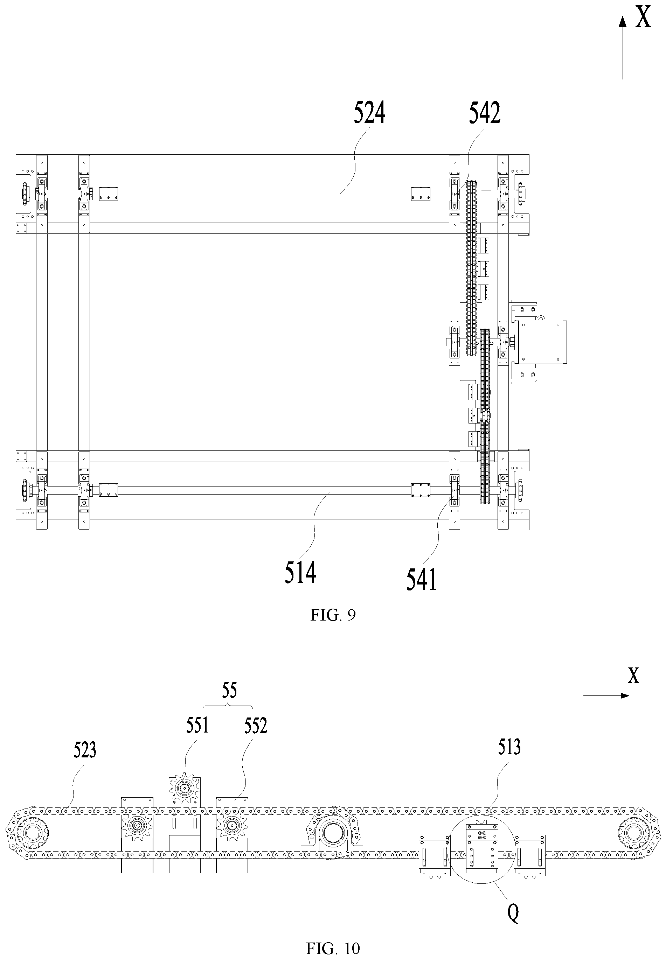

In some embodiments, as shown in FIG. 10, the tensioning assembly 55 includes an adjustment mechanism 552 connected to the tensioning wheel 551, and the tensioning wheel 551 changes its position in the lifting direction through the adjustment mechanism 552.

The adjusting mechanism 552 is connected to the tensioning wheel 551 and can drive the tensioning wheel 551 to move along the lifting direction, thereby changing the magnitude of the tensioning force exerted by the tensioning wheel 551 on the first chain 513. When the first chain 513 is loose, the adjustment mechanism 552 can drive the tension wheel 551 to move and apply a larger tension wheel 551 to the first chain 513, thereby ensuring that the tension of the first chain 513 remains stable.

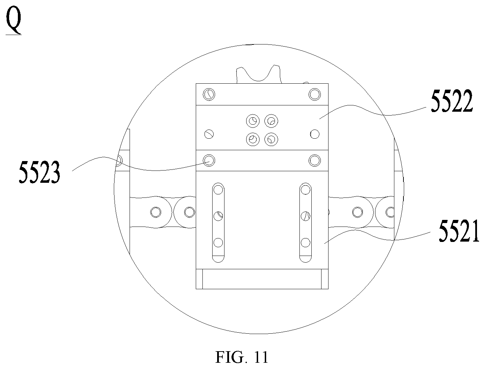

In some embodiments, referring to FIGS. 10 and 11, the adjustment mechanism 552 includes a fixed plate 5521 and a sliding plate 5522 slidably connected to the fixed plate 5521 along the lifting direction, and the tensioning wheel 551 is fixed to the sliding plate 5522.

The adjustment mechanism 552 includes the fixed plate 5521 and the sliding plate 5522. The fixed plate 5521 can be set on a preset plane and remains fixed. The sliding plate 5522 is slidably connected to the fixed plate 5521 and drives the tensioning wheel 551 to move synchronously, so as to change the position of the wheel 551 in the lifting direction and thus adjust the tension on the first chain 513.

Optionally, a sliding connection member may be provided between the fixed plate 5521 and the sliding plate 5522. The sliding connection member includes a slider and a slide rail provided on the fixed plate 5521 and the sliding plate 5522. The slide rail extends along the lifting direction. The slider can move relatively on the slide rail to change the relative position of the fixed plate 5521 and the sliding plate 5522 in the lifting direction. This design not only realizes the sliding connection between the fixed plate 5521 and the sliding plate 5522, but also prevents the sliding plate 5522 from moving relative to the fixed plate 5521 in other directions except for the lifting direction.

In some embodiments, at least one of the fixed plate 5521 and the sliding plate 5522 includes the plurality of second mounting holes 5523 arranged side by side along the lifting direction, and the fixed plate 5521 and the sliding plate 5522 are fixed through the second mounting holes 5523.

The second mounting holes 5523 are configured to fix the fixed plate 5521 and the sliding plate 5522. Optionally, only one of the fixed plate 5521 and the sliding plate 5522 may be provided with the second mounting holes 5523, and the other may be provided with corresponding pins in plug-in fit with the second mounting holes for fixation. Or the fixed plate 5521 and the sliding plate 5522 are both provided with second mounting holes 5523. The second mounting holes 5523 both on the fixed plate 5521 and the sliding plate 5522 are aligned, and pins pass through the fixed plate 5521 and the sliding plate 5522 to fix them in the lifting direction.

In the embodiments of the present disclosure, the fixed plate 5521 and the sliding plate 5522 are fixedly connected through the second mounting holes 5523, thereby ensuring that the tensioning wheel 551 connected to the sliding plate 5522 remains fixed during use.

In some embodiments, the first chain 513 forms a closed-loop structure, and a plurality of tensioning assemblies 55 are provided. Tensioning wheels 551 of at least some of the tensioning assemblies 55 are located inside the closed-loop structure, and tensioning wheels 551 of at least some of the tensioning assemblies 55 are located outside the closed loop structure.

The tensioning wheels 551 located inside the closed-loop structure and the tensioning wheels 551 located outside the closed-loop structure provide tensioning forces in different directions to the first chain 513. During the movement of the first chain 513, the tensioning forces in different directions can help the first chain 513 better maintain its own tension and improves reliability.

In some embodiments, as shown in FIG. 10, the plurality of tensioning assemblies 55 are spaced apart along the first direction X, and the tensioning wheels 551 of adjacent tensioning assemblies 55 are located on both the inner side and outer side of the closed-loop structure.

During the movement of the first chain 513, since the adjacent tensioning wheels 551 are located on inner and outer sides of the closed-loop structure, when a tension force of a single tensioning wheel 551 is applied on one side of the first chain 513, the first chain can immediately move to the position of the adjacent tensioning wheel 551, the other side of the first chain 513 is also subject to the tension force, ensuring that the forces on two sides of the first chain 513 are balanced and improving the service life of the first chain 513.

In a second aspect, embodiments of the present disclosure provide a battery swapping station for replacing the battery of a vehicle. The battery swapping station includes the lifting device of any of the aforementioned embodiments. It can be understood that the battery swapping station in the embodiments of the present disclosure has the beneficial effects of the lifting device in any of the foregoing embodiments, the details of which will not be repeated in the embodiments of the present disclosure.

According to some embodiments of the present disclosure, referring to FIGS. 3 to 10, the lifting device includes the driving mechanism 3, the lifting mechanism 4 and the transmission mechanism 5. The lifting mechanism 4 includes the first lifting assembly 41 and the second lifting assembly 42. The transmission mechanism 5 includes the first transmission assembly 51 and the second transmission assembly 52. The driving mechanism 3 drives the first lifting assembly 41 and the second lifting assembly 42 to move through the first transmission assembly 51 and the second transmission assembly 52, respectively. The first transmission assembly 51 includes the first driving wheel 511, the first driven wheel 512 and the first chain 513. The first driven wheel 512 is connected to the first transmission shaft 514, and the first transmission shaft 514 is provided with the first output wheel 515. The first output wheel 515 is chain-driven with the first lifting assembly 41, to lift or lower the vehicle. The first transmission shaft 514 includes the first part 5141, the connecting part 5143 and the second part 5142. The first part 5141 and the second part 5142 are coaxially connected through the first coupling assembly 531 and the second coupling assembly 532. In addition, the transmission mechanism 5 also includes the tensioning assembly 55. The tensioning assembly 55 includes the tensioning wheel 551 and the adjustment mechanism 552. The adjustment mechanism 552 can change the height of the tensioning wheel 551 in the lifting direction to adjust the first chain 513 of tension.

Finally, it should be noted that: the above embodiments are only used to illustrate, not to limit, the technical solution of the present disclosure. Although the present disclosure is described in detail with reference to the foregoing embodiments, those skilled in the art should understand that they may still modify the technical solutions described in the foregoing embodiments, or replace some of the technical features with equivalents, but these modifications or replacements do not depart the essence of the corresponding technical solutions from the gist and scope of the technical solutions of each embodiment of the present disclosure. Especially, as long as there is no structural conflict, the various technical features mentioned in respective embodiments can be combined in any way. The present disclosure is not limited to specific embodiments disclosed herein, but includes all technical solutions falling within the scope of the claims.

## Claims

1. A lifting device for a battery swapping station, comprising:
a driving mechanism;
a lifting mechanism comprising a first lifting assembly and a second lifting assembly arranged on two sides of the driving mechanism along a first direction respectively and configured for lifting an electrical apparatus, the first direction being perpendicular to a lifting direction of the electrical apparatus; and
a transmission mechanism comprising a first transmission assembly and a second transmission assembly, the first transmission assembly connected to the driving mechanism and the first lifting assembly, the second transmission assembly connected to the driving mechanism and the second lifting assembly, and the driving mechanism configured to drive the first lifting assembly and the second lifting assembly to move synchronously through the first transmission assembly and the second transmission assembly, respectively.

2. The lifting device according to claim 1, wherein the first transmission assembly comprises:
a first driving wheel connected to the driving mechanism;
a first driven wheel connected to the first lifting assembly; and
a first chain sleeved on the first driving wheel and the first driven wheel.

3. The lifting device according to claim 2, wherein the second transmission assembly comprises:
a second driving wheel connected to the driving mechanism;
a second driven wheel connected to the second lifting assembly; and
a second chain sleeved on the second driving wheel and the second driven wheel,
wherein the first driving wheel and the second driving wheel are coaxially connected to the driving mechanism to move synchronously.

4. The lifting device according to claim 3, wherein the first transmission assembly further comprises a first transmission shaft and two first output wheels, the first driven wheel is sleeved on the first transmission shaft, and the two first output wheels are arranged on the first transmission shaft and spaced apart along an axial direction of the first transmission shaft; and
two first lifting assemblies are provided, and the two first output wheels are connected to the two first lifting assemblies respectively, for driving the two first lifting assemblies to move synchronously.

5. The lifting device according to claim 4, wherein the two first output wheels are provided at two ends of the first transmission shaft in the axial direction of the first transmission shaft, respectively.

6. The lifting device according to claim 4 or 5, wherein the first transmission shaft comprises a plurality of sections, and two adjacent sections of the plurality of sections are coaxially connected through a coupling assembly.

7. The lifting device according to claim 6, wherein the first transmission shaft comprises a first part, a connecting part and a second part arranged sequentially along its axial direction, the first driven wheel is arranged on the first part, and the two first output wheels are arranged on the first part and the second part, respectively; and
the coupling assembly comprises a first coupling assembly disposed between the first part and the connecting part, and a second coupling assembly disposed between the second part and the connecting part, and the first part and the second part are coaxially disposed through the first coupling assembly and the second coupling assembly.

8. The lifting device according to claim 7, wherein the first coupling assembly comprises a first mounting hole and a first key slot extending through the first coupling assembly along the axial direction of the first transmission shaft and in communication with each other, and
a first installation key is provided at one end of the first part close to the connecting part, the first part is connected to the first key slot through the first installation key, a second installation key is provided at one end of the connecting part close to the first part, and the connecting part is connected to the first key slot through the second installation key.

9. The lifting device according to any one of claims 4 to 7, wherein the second transmission assembly further comprises a second transmission shaft disposed on the second driven wheel and moving synchronously with the second driven wheel; and
the transmission mechanism further comprises a first bearing seat rotatably connected with the first transmission shaft, and a second bearing seat rotatably connected with the second transmission shaft, wherein the first bearing seat and the second bearing seat are fixed on a preset plane so as to support the first transmission shaft and the second transmission shaft respectively.

10. The lifting device according to claim 9, wherein a plurality of first bearing seats are provided and spaced apart along the axial direction of the first transmission shaft, a plurality of second bearing seats are provided and spaced apart along the axial direction of the second transmission shaft, and the plurality of first bearing seats and the plurality of second bearing seats are arranged correspondingly in the first direction.

11. The lifting device according to any one of claims 2 to 10, wherein the transmission mechanism further comprises a tensioning assembly, which comprises a tensioning wheel, the tensioning wheel abutted against the first chain to adjust a tension of the first chain.

12. The lifting device according to claim 11, wherein the tensioning assembly comprises an adjustment mechanism connected to the tensioning wheel, and the adjustment mechanism is configured to change a position of the tensioning wheel in the lifting direction.

13. The lifting device according to claim 12, wherein the adjustment mechanism comprises a fixed plate and a sliding plate slidably connected to the fixed plate along the lifting direction, and the tensioning wheel is fixed to the sliding plate.

14. The lifting device according to claim 13, wherein at least one of the fixed plate and the sliding plate comprises a plurality of second mounting holes arranged side by side along the lifting direction, and the fixed plate and the sliding plate are fixed to each other through the second mounting holes.

15. The lifting device according to any one of claims 11 to 14, wherein the first chain forms a closed-loop structure, and a plurality of tensioning assemblies are provided, wherein tensioning wheels of at least some of the tensioning assemblies are located within the closed-loop structure, and tensioning wheels of at least some of the tensioning assemblies are located outside the closed-loop structure.

16. The lifting device according to claim 15, wherein the plurality of the tensioning assemblies are spaced apart along the first direction; and
the tensioning wheels of adjacent tensioning assemblies are located on both an inner side and an outer side of the closed-loop structure.

17. A battery swapping station configured to replace a battery of an electrical apparatus and comprising the lifting device according to any one of claims 1-16.
